# EUROPÄISCHE PATENTANMELDUNG

(11) **EP 2 862 710 A1**
(43) Veröffentlichungstag der Anmeldung: **22.04.2015**
(21) Anmeldenummer: 14189578.9
(22) Anmeldetag: 20.10.2014
(51) Int. Cl.: B32B 7/12, B32B 27/10, B32B 29/00, B32B 38/12, B32B 1/00, B32B 1/02

(54) **Muldenförmig ausgebildetes Teil**

(30) Priorität: 21.10.2013 DE 102013111604
(71) Anmelder: Paccor International GmbH, 56856 Zell/Mosel (DE)
(72) Erfinder:
(74) Vertreter: Hutzelmann, Gerhard

(57) **Zusammenfassung**

Muldenförmig ausgebildetes Teil (1), insbesondere Verpackungsbehälter bzw. Deckel oder Schale, wobei das Teil (1) wenigstens eine, vorzugsweise wenigstens zwei faserhaltige Lagen, insbesondere Papierlagen aufweist und im Tiefziehverfahren oder dergleichen hergestellt ist.

## Beschreibung

Die Erfindung bezieht sich auf ein muldenförmig ausgebildetes Teil, insbesondere Verpackungsbehälter bzw. Deckel oder Schale.

Derartige Teile sind in einer Vielzahl bekannt; sie werden meist aus Kunststoff in unterschiedlichsten Verfahren hergestellt.

Der Erfindung liegt die Aufgabe zugrunde, ein muldenförmiges Teil der genannten Art weitgehend aus nachwachsenden Rohstoffen herzustellen.

Diese Aufgabe wird erfindungsgemäß dadurch gelöst, dass das Teil wenigstens eine, vorzugsweise wenigstens zwei Lagen, insbesondere Papierlagen aufweist und im Tiefziehverfahren oder dergleichen hergestellt ist.

Die Papierlage bzw. -lagen ist bzw. sind dabei als nachwachsender Rohstoff vorhanden. Gerade bei Einsatz mehrerer Lagen lässt sich das muldenförmige Teil sehr gut tiefziehen.

Sehr vorteilhaft ist es dabei, wenn das Teil mehrlagig ausgebildet ist und wenigstens eine Papierlage und wenigstens eine, vorzugsweise wenigstens zwei weitere Lagen aufweist, wobei diese vorzugsweise Papierlagen sind.

Damit wurden beste Ergebnisse hinsichtlich der Tiefziehbarkeit erzielt.

Erfindungsgemäß ist es dabei sehr vorteilhaft, wenn zwischen zwei aufeinanderfolgenden faserhaltigen Lagen ein Haftvermittler, Klebstoff, eine Kunststofflage oder dergleichen vorgesehen ist.

Dadurch wird das muldenförmige Teil sowohl während des Tiefziehens als auch als fertiges Produkt vorteilhaft stabilisiert.

Ebenfalls sehr vorteilhaft ist es, wenn gemäß einer weiteren Ausgestaltung der Erfindung das mehrlagige Teil wenigstens auf einer Seite mit einer Resistenzschicht, vorzugsweise einer Imprägnienmg, Beschichtung, Kaschierung oder dergleichen ausgerüstet ist.

Je nach dem Einsatzzweck des muldenförmigen Teils ist die Innenseite, die Aussenseite oder beide Seiten mit einer Resistenzschicht versehen.

Äußerst vorteilhaft ist es gemäß einer weiteren Ausgestaltung der Erfindung, wenn die Fasern verhältnismäßig kurz ausgebildet sind.

Auch hierdurch wird die Tiefziehbarkeit verbessert. Unerwünschte Risse werden verhindert.

Ebenfalls sehr vorteilhaft gemäß einer weiteren Weiterbildung der Erfindung ist es, wenn die Fasern verhältnismäßig lang ausgebildet sind.

Damit wird die Elastizität des Materials erhöht.

Sehr vorteilhaft ist es erfindungsgemäß auch, wenn kurze und lange Fasern innerhalb einer Schicht und/oder als Schichtabfolge gemischt sind.

Besonders die Kombination von kurzfasrigen und langfasrigen Schichten ergibt die erwünschte glatte Tiefziehbarkeit.

Eine vorteilhafte Weiterbildung der Erfindung ist dadurch gekennzeichnet, dass die Papierlagen oder wenigstens eine Papierlage durch zwei Kunststofflagen bzw. -schichten umschlossen ist.

Dadurch wird die Tiefziehfähigkeit der Papierlage noch weiter verbessert. Zudem wird eine sehr hohe Resistenz erzielt.

Gemäß einer besonderen Ausgestaltung der Erfindung ist vorgesehen, dass zwischen zwei faserhaltigen Lagen, insbesondere zwischen zwei Papierlagen eine Kunststofflage vorgesehen ist.

Nicht nur die Tiefziehfähigkeit der Papierlagen wird dadurch vergrößert sondern auch die Dichtigkeit des damit hergestellten Teils wesentlich erhöht.

Erfindungsgemäß hat es sich auch als äußerst vorteilhaft erwiesen, wenn wenigstens eine Oberfläche des Teils, vorzugsweise die einem Füllgut zugewandte Oberfläche, mit einer Papierlage aus Primärfasern oder einer Polymerlage ausgerüstet ist, und/oder eine Imprägnienmg aufweist.

Hierdurch ist das erfindungsgemäße Teil sehr gut lebensmittelverträglich. Die Polymerlage kann auch aus nachwachsenden Rohstoffen, wie beispielsweise PLA oder dergleichen bestehen.

Eine weitere vorteilhafte Ausgestaltung der Erfindung ist dadurch gekennzeichnet, dass ein wenigstens annähernd ebener Bodenabschnitt vorgesehen ist, an den ein umlaufender Rand anschließt, wobei zwischen dem Bodenabschnitt und dem Rand verhältnismäßig großradige Übergänge vorgesehen sind, deren Radius in der Größenordnung von 1,0 bis 1,5 cm liegt.

Durch diese Ausgestaltung kann beim Tiefziehen eine einwandfreie Verformung des Ausgangsmaterials und insbesondere der Papierlage erreicht werden.

Als sehr vorteilhaft hat es sich auch ergeben, wenn gemäß einer weitren Ausgestaltung der Erfindung am oberen Ende des Randes ein horizontal verlaufender Randstreifen angeformt ist, wobei der Randstreifen als Siegelrand ausgebildet sein kann.

Damit kann das muldenförmige Teil durch Aufsiegeln eines im wesentlichen ebenen Deckels verschlossen werden.

Eine ebenfalls sehr vorteilhafte Ausgestaltung des erfindungsgemäßen Teils liegt darin, dass der Bodenabschnitt gegenüber den umgebenden Übergangen wenigstens geringfügig hochgezogen ist.

Damit wird auch im gefüllten Zustand des muldenförmigen Teils eine gute Standfestigkeit erzielt.

Eine weitere vorteilhafte Ausgestaltung der Erfindung liegt darin, dass das Teil als Unterteil oder Deckel eines Verpackungsbehälters ausgebildet ist.

Ebenfalls sehr vorteilhaft ist es erfindungsgemäß auch, wenn wenigstens eine der Papierlagen einen Kunststoffanteil, vorzugsweise einen hohen Kunststoffanteil aufweist.

Hierdurch werden die Tiefzieheigenschaften des Materials nochmals verbessert. Äußerst vorteilhaft ist es erfindungsgemäß auch, wenn im Materialaufbau des muldenförmigen Teils eine Kavität oder dergleichen vorgesehen ist.

Damit lassen sich Blister innerhalb des muldenförmigen Teils oder aber auch mehrkomponentige muldenförmige Teile erzeugen.

Ein vorteilhaftes Verfahren zum Herstellen eines erfindungsgemäßen muldenförmigen Teils ist dadurch gekennzeichnet, dass mehrere faserhaltige Lagen, insbesondere Papierlagen aufeinandergelegt und miteinander tiefgezogen werden.

Dabei hat es sich erfindungsgemäß als besonders vorteilhaft ergeben, wenn die faserhaltigen Lagen eine kontrollierte Feuchtigkeit aufweisen und dabei angefeuchtet werden bzw. eine hohe Feuchtigkeit aufweisen können.

Hiermit wird die Tiefziehfähigkeit der faserhaltigen Lagen ganz wesentlich verbessert.

Als ebenfalls sehr vorteilhaft für das Tiefziehen hat es sich ergeben, wenn die Lagen zum Formen erhitzt werden können.

Hierdurch ergibt sich nochmals eine verbesserte Tiefziehfähigkeit.

Erfindungsgemäß hat es sich als sehr vorteilhaft erwiesen, wenn die Bearbeitungswerkzeuge zum Tiefziehen erhitzt werden.

Dadurch ergibt sich eine gleichmäßige Erwärmung des Materials.

Ebenfalls sehr vorteilhaft ist es erfindungsgemäß, wenn überschüssige Feuchtigkeit der Lagen beim Tiefziehen oder danach ausgepresst wird.

Damit wird sichergestellt, daß eventuell noch enthaltenes Wasser, das auch zur Verbesserung der Tiefziehfähigkeit genutzt werden kann, nach Formung des muldenförmigen Teils nicht mehr in diesem enthalten ist und die Eigenschaften eventuell negativ beeinflusst.

Eine weitere vorteilhafte Ausgestaltung des erfindungsgemäßen Verfahrens liegt darin, dass die Lagen beim Formen miteinander verbunden werden.

Damit lassen sich auch lose aufeinanderliegende oder noch nicht endfest miteinander verbundene Lagen miteinander verbinden, ohne daß ein zusätzlicher Verfahrensschritt notwendig wäre.

Äußerst vorteilhaft hat es sich erfindungsgemäß erwiesen, wenn die Lagen beim Formen lose geklemmt bzw. gehalten werden.

Hierdurch wird ein Nachrutschen beim Umformen ermöglicht.

In der Zeichnung ist die Erfindung anhand mehrerer Ausführungsbeispiele veranschaulicht. Dabei zeigen:
- Fig.1: eine schaubildliche Darstellung eines muldenförmigen Teils, das als Unterteil eines Verpackungsbehälters dient,
- Fig.2: einen Querschnitt durch das muldenförmige Teil nach Fig.1,
- Fig.3: eine vergrößerte Darstellung des Aufbaus des muldenförmigen Teils und
- Fig.4: ein weiteres muldenförmiges Teil, das als Oberteil eines Verpackungsbehälters vorgesehen ist, im Schnitt.

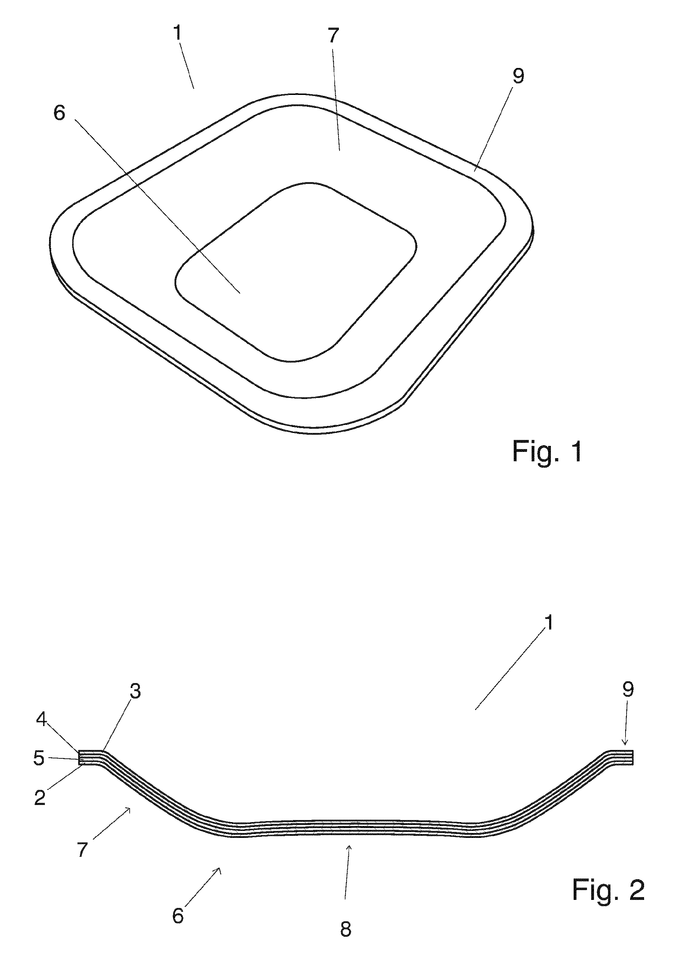

Mit 1 ist in Fig.1 bis 3 ein muldenförmiges Teil bezeichnet, das aus wenigstens einer ersten Papierlage 2 und wenigstens einer zweiten Papierlage 3 besteht und tiefgezogen ist. Je nach geforderter Festigkeit, Stabilität und Dichtigkeit können sowohl mehrere Papierlagen 4 als auch alternativ oder zusätzlich Kunststofflagen 5 vorgesehen werden. Dabei kann der Kunststoff auch als auf die Papierlagen beispielsweise aufextrudierte Kunststoffschicht ausgebildet sein.

Durch die abwechselnde Anordnung von mehreren Papierlagen bzw. von Papier und Kunststofflagen bzw. Kunststoffschichten, ist dieser Verbund genauso wie ein reiner Kunststoffverbund tiefziehfähig.

Dies ist auch besonders dann der Fall, wenn sich die Faserlänge der Papierfasern in den einzelnen Schichten unterscheidet. Auch eine Vermischung unterschiedlicher Faserlängen in einer Papierschicht ist denkbar.

Es ist im Rahmen der Erfindung durchaus möglich, zumindest im Inneren des Verbundes auf Kunststoff ganz zu verzichten und die faserhaltigen Lagen unmittelbar miteinander zu verbinden und dennoch einen tiefziehfähigen Verbund zu erhalten.

Je nach den Anforderungen an das fertige Teil kann der Aufbau der Lagen erheblich variieren.

Wie besonders in Fig.2 dargestellt ist, sind die Radien besonders im Bereich des Bodens 6 zwischen diesem und dem anschließenden Rand 7 verhältnismäßig groß ausgebildet und betragen etwa 1,0 bis 1,5 cm.

Damit wird ein Aufreißen der Papierlagen beim Tiefziehen sicher vermieden. Die Dehnung des Materials wird auf einen größeren Bereich verteilt.

Durch eine entsprechende Ausgestaltung der Tiefziehstation kann auch bei kleineren Radien die Dehnung auf einen breiteren Bereich verteilt werden. Vor allem wird durch ein kontrolliertes Nachrutschen von Material die lokale Dehnung begrenzt und so eine mögliche Beschädigung des Materialaufbaus verhindert. Dieses kontrollierte Nachrutschen kann durch eine lose Klemmung, die mit einer Kraftbegrenzung der Klemmung einhergeht.

Der Boden 6 kann zusätzlich einen hochgezogen inneren Abschnitt 8 aufweisen, wodurch sich eine sehr gute Standfestigkeit des muldenförmigen Teils 1 ergibt, auch wenn sich der Boden beim Befüllen geringfügig nach unten durchbiegt.

Am Rand 7 ist am oberen Ende ein horizontal verlaufender Randstreifen 9 angeformt, an dem ein Deckel befestigt werden kann.

Dieser Randstreifen 9 kann als Siegelrand ausgebildet sein, auf den ein flacher Deckel aufgesiegelt werden kann.

Er kann jedoch aufgrund der ohnehin vorhandenen Steifigkeit auch als Widerlager für einen Schnappdeckel dienen. Darüber hinaus ist auch eine Kombination aus Siegel-und Schnappdeckel denkbar.

Beim Aufbau der verschiedenen Lagen hat es sich als vorteilhaft erwiesen, wenn die innerste Lage 3 imprägniert oder beispielsweise mit Kunststoff beschichtet ist, oder aber aus Kunststoff besteht, wodurch eine besondere Dichtigkeit des muldenförmigen Teils 1 erreicht wird.

Dagegen kann die Außenlage von einer Papierlage gebildet sein,

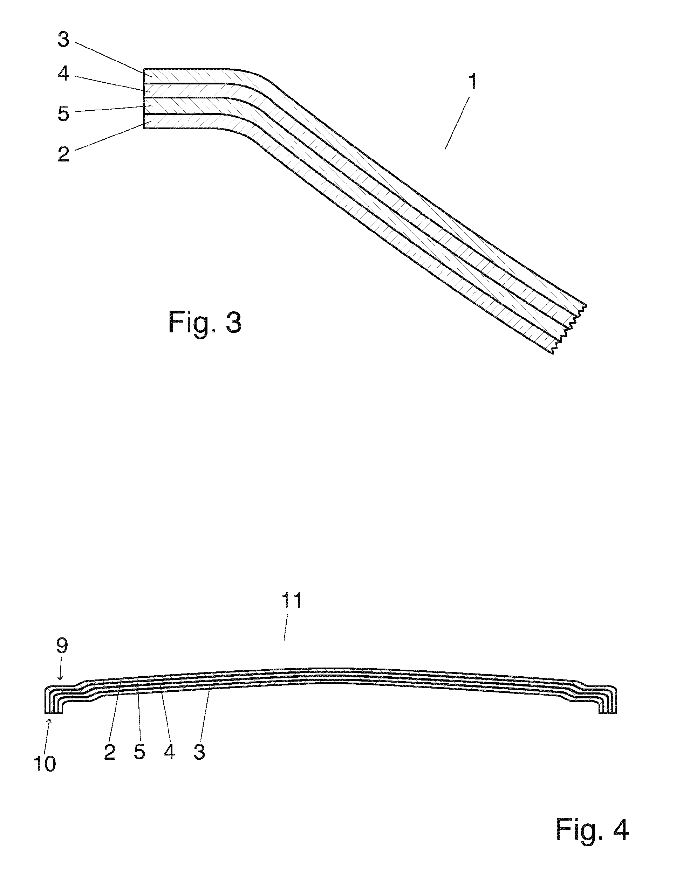

Wird das muldenförmige Teil - wie in Fig. 4 dargestellt - als Deckel 11 eines nicht weiter dargestellten Verpackungsbehälters vorgesehen, so ist im Prinzip der gleiche Aufbau möglich.

Hier kann allerdings der Randstreifen 9 zusätzlich einen nach unten abgebogenen Abschnitt 10 aufweisen, der um den Randstreifen 9 des Unterteils 1 herumgreifen kann.

Zusätzlich können die beiden Randstreifen miteinander versiegelt werden.

Beim Tiefziehen können die Bearbeitungswerkzeuge erhitzt werden und so das Material sehr gleichmäßig erhitzt wird. Das erhitzte Material lässt sich nochmals besser Tiefziehen.

Es ist auch denkbar, daß im Material enthaltene, überschüssige Feuchtigkeit beim Umformen oder aber auch danach ausgepresst wird und so das geformte muldenförmige Teil getrocknet wird. Besonders wenn das Material, also die faserhaltigen Lagen zu Beginn der Umformung eine erhöhte Feuchtigkeit aufgewiesen haben, ist dieser Bearbeitungsschritt sinnvoll.

Zum Einsatz kommen Papierlagen mit kurzen, langen oder auch gemischten Fasern. Zudem können die Lagen einen Kunststoffanteil aufweisen. Der Kunststoff wird dabei als Bindemittel genutzt, wodurch sich die Tiefziehbarkeit nochmals verbessert.

Innerhalb des Materialaufbaus können auch Kavitäten zur Aufnahme von Gegenständen vorgesehen werden. Dies ermöglicht die Herstellung zum Beispiel von Blistern oder Mehrkomponenten-Trays.

## Patentansprüche

1. Muldenförmig ausgebildetes Teil, insbesondere Verpackungsbehälter bzw. Deckel oder Schale, **dadurch gekennzeichnet, dass** das Teil wenigstens eine, vorzugsweise wenigstens zwei faserhaltige Lagen, insbesondere Papierlagen aufweist und im Tiefziehverfahren oder dergleichen hergestellt ist.

2. Muldenförmiges Teil nach Anspruch 1, **dadurch gekennzeichnet, daß** das Teil mehrlagig ausgebildet ist und wenigstens eine erste Papierlage und wenigstens eine, vorzugsweise wenigstens zwei weitere Lagen aufweist, wobei diese vorzugsweise Papierlagen sind.

3. Muldenförmiges Teil nach Anspruch 1 oder 2, **dadurch gekennzeichnet, dass** zwischen zwei aufeinanderfolgenden faserhaltigen Lagen ein Haftvermittler, Klebstoff, eine Kunststofflage oder dergleichen vorgesehen ist.

4. Muldenförmiges Teil, nach Anspruch 1, 2 oder 3, **dadurch gekennzeichnet, dass** das Teil wenigstens auf einer Seite mit einer Schutzschicht, vorzugsweise einer Imprägnierung, Beschichtung, Kaschierung oder dergleichen ausgerüstet ist.

5. Muldenförmiges Teil nach einem der Ansprüche 1 bis 4, **dadurch gekennzeichnet, dass** die Fasern verhältnismäßig kurz ausgebildet sind.

6. Muldenförmiges Teil nach einem der Ansprüche 1 bis 4, **dadurch gekennzeichnet, dass** die Fasern verhältnismäßig lang ausgebildet sind.

7. Muldenförmiges Teil nach einem der vorangehenden Ansprüchen, **dadurch gekennzeichnet, daß** kurze und lange Fasern innerhalb einer Schicht und/oder als Schichtabfolge gemischt sind.

8. Muldenförmiges Teil, nach einem der vorhergehenden Ansprüche, **dadurch gekennzeichnet, dass** die Papierlagen oder wenigstens eine Papierlage durch zwei Kunststofflagen bzw. -schichten umschlossen ist und/oder dass zwischen zwei faserhaltigen Lagen, insbesondere zwischen zwei Papierlagen eine Kunststofflage vorgesehen ist und/oder dass wenigstens eine Oberfläche des Teils, vorzugsweise die einem Füllgut zugewandte Oberfläche, mit einer Papierlage aus Primärfasern oder einer Polymerlage ausgerüstet ist, und/oder eine Imprägnierung aufweist und/oder dass wenigstens eine der Papierlagen einen Kunststoffanteil, vorzugsweise einen hohen Kunststoffanteil aufweist.

9. Muldenförmiges Teil nach einem der vorhergehenden Ansprüche, **dadurch gekennzeichnet, dass** ein wenigstens annähernd ebener Bodenabschnitt vorgesehen ist, an den ein umlaufender Rand anschließt, wobei zwischen dem Bodenabschnitt und dem Rand verhältnismäßig großradige Übergänge vorgesehen sind, deren Radius in der Größenordnung von 1,0 bis 1,5 cm liegt und wobei am oberen Ende des Randes ein horizontal verlaufender Randstreifen angeformt sein kann, der als Siegelrand ausgebildet sein kann.

10. Muldenförmiges Teil nach einem der vorhergehenden Ansprüche, **dadurch gekennzeichnet, dass** wenigstens ein Bodenabschnitt gegenüber den umgebenden Übergangen wenigstens geringfügig hochgezogen ist und/oder dass im Materialaufbau des muldenförmigen Teils eine Kavität oder dergleichen vorgesehen ist.

11. Muldenförmiges Teil nach einem der vorhergehenden Ansprüche, **dadurch gekennzeichnet, dass** das Teil als Unterteil oder Deckel eines Verpackungsbehälters ausgebildet ist.

12. Verfahren zum Herstellen eines muldenförmigen Teils nach einem der vorangehenden Ansprüche, **dadurch gekennzeichnet, dass** mehrere faserhaltige Lagen, insbesondere Papierlagen aufeinandergelegt und miteinander tiefgezogen werden, wobei die faserhaltigen Lagen eine kontrollierte Feuchtigkeit aufweisen können und dabei angefeuchtet werden bzw. eine hohe Feuchtigkeit aufweisen können.

13. Verfahren nach Anspruch 12, **dadurch gekennzeichnet, dass** die Lagen zum Formen erhitzt werden können und/oder dass die Bearbeitungswerkzeuge zum Tiefziehen erhitzt werden.

14. Verfahren nach Anspruch 12 oder 13, **dadurch gekennzeichnet, daß** überschüssige Feuchtigkeit der Lagen beim Tiefziehen oder danach ausgepresst wird.

15. Verfahren nach einem der Ansprüche 12 bis 14, **dadurch gekennzeichnet, dass** die Lagen beim Formen miteinander verbunden werden und/oder dass die Lagen beim Formen lose geklemmt bzw. gehalten werden.
